# EUROPEAN PATENT APPLICATION

(11) **EP 4 675 116 A1**
(43) Date of publication of application: **07.01.2026**
(21) Application number: 24185812.5
(22) Date of filing: 01.07.2024
(51) Int. Cl.: F16C 11/06

(54) **BALL JOINT ARRANGEMENT FOR A VEHICLE AND VEHICLE SUSPENSION**

(71) Applicant: Volvo Car Corporation, 405 31 Göteborg (SE)
(72) Inventor: NORDELL, Magnus, 40531 München (SE); SKAGIUS, Adam, 40531 München (SE)
(74) Representative: Maiwald GmbH

(57) **Abstract**

The disclosure relates to a ball joint arrangement (10) for a vehicle, the ball joint arrangement (10) comprising:
- a ball stud (13), the ball stud (13) comprising a joint ball (14) and a stud portion (15), the stud portion (15) comprising a threaded hole (17);
- a joint housing (18), the joint ball (14) being mounted inside the joint housing (18);
- a vehicle part (11), the vehicle part (11) comprising a recess (12) into which at least a part of a connection section (15a) of the stud portion (15) is positively inserted; and
- a screw (20), the screw (20) being fasted inside the threaded hole (17) such that it attaches the vehicle part (11) to the ball stud (13);

wherein the recess (12) and/or the at least part of the connection section (15a) comprises a structured surface (16).

## Description

### TECHNICAL FIELD

The present disclosure relates to a ball joint arrangement for a vehicle and a vehicle suspension.

### BACKGROUND ART

Ball joint arrangements are typically formed by a ball cavity or socket and a ball stud having a spherical head inserted into the ball cavity or socket. Joining components with one another by using such ball joint arrangements permits a multi-planar pivoting between the components and thus a wide range of motion compared to other types of joint arrangements. For this reason, many applications make use of these joint arrangements. For example, vehicles use ball joint arrangements in their suspensions, including steering components.

Typically, the ball stud requires a certain length such that it can be attached to one of the components to be joined with one another, e.g., by using a pinch bolt. However, this length of the ball stud requires space and may limit an installation space. For example, in vehicle suspensions, the ball stud may limit the usable wheel size at certain installation locations or components of the vehicle suspension. Moreover, a lengthy ball stud has increased weight. Using shorter ball studs and/or other attachment designs may be challenging when it comes to assembling the ball joint arrangement including the components to be joined with one another.

Hence, there is a need for a space and weight saving ball joint arrangement that is easy to assemble.

### SUMMARY

The problem is at least partially solved or alleviated by the subject matter of the independent claims of the present disclosure, wherein further examples are provided in the dependent claims.

According to a first aspect, there is provided a ball joint arrangement for a vehicle, the ball joint arrangement comprising:
- a ball stud, the ball stud comprising a joint ball and a stud portion, the stud portion comprising a threaded hole;
- a j oint housing, the j oint ball being mounted inside the j oint housing;
- a vehicle part, the vehicle part comprising a recess into which at least a part of a connection section of the stud portion is positively inserted; and
- a screw, the screw being fasted inside the threaded hole such that it attaches the vehicle part to the ball stud;
wherein the recess and/or the at least part of the connection section comprises a structured surface.

Thereby, a type of ball joint arrangement is provided, which attaches a vehicle part to a joint housing using a screw and a ball stud. By providing a threaded hole inside the stud portion, the screw can be advantageously fastened inside the stud portion. Particularly, the screw may be inserted and fastened with its length along a length of the stud portion. Hence, the stud portion may advantageously be used for attaching the screw therein. Compared to other solutions, such as a pinch bolt, the stud portion may thereby be provided with a shorter length and thus with less weight and less space restrictions.

However, the inventors have further found that assembling the ball joint arrangement may be challenging. In particular, when fastening the screw inside the threaded hole, the ball stud may be rotating when fastening the screw, while it may be difficult to hold the joint housing in place due to limited accessibility thereof in a tight space of a vehicle suspension. For this purpose, the recess inside the vehicle part and/or the connection section of the stud portion that is being positively inserted at least in part into the recess comprises a structured surface. During the fastening of the screw, the structured surface, unlike an even surface, gives grip to the vehicle part and/or the at least part of the connection section, thereby significantly easing the assembly and avoiding potential safety issues due to faulty assembly, e.g., not having the screw completely fastened. However, the structured surface does not necessarily only aid the assembly. For example, the structured surface may strengthen the attachment of the vehicle part to the stud portion.

The joint housing may be or comprise a ball joint or ball socket. The joint housing may be attached to or integrally formed with a further vehicle part or generally be a further vehicle part. For example, the further vehicle part or the vehicle part may be a control arm, a steering knuckle, or any other part of a vehicle suspension, including suspension, linking and/or steering components of the vehicle suspension. Vehicle suspension is herein to be understood as including any suspension, linking, and steering component attached to the vehicle wheels of the vehicle. The vehicle suspension may in particular but not only be a road vehicle suspension, including cars and trucks.

The ball stud may have at least the joint ball as a portion of the ball stud and the stud portion. The stud portion has the shape of a stud and may be generally cylindrically shaped. At least a part of the stud portion, in particular the part of the connection section positively inserted into the recess of the vehicle part, may have a tapered or conical shape. The screw may have a shank portion comprising an outer threading corresponding to an inner threading of the threaded hole for fastening the screw therein. Further, the screw may have a head for fixing the screw with its head against or at a surface of the vehicle part.

Generally, the stud portion may comprise one or more sections, one of which is the connection section, which may be connecting the stud portion to the vehicle part. In particular, an outer surface of the connection section of the stud portion may be in contact with the vehicle part. One or more other sections of the stud portion may be provided for other purposes, e.g., for attaching a sealing element such as a sealing sleeve thereto. The threaded hole may extend only through a partial length or the full length of the stud portion. Also, the threaded hole may extend in length also through the joint ball in part or entirely. Accordingly, the threaded hole may have only one opening at the stud portion or, alternatively, two openings, one at the stud portion and one of the joint ball.

In an example, the structured surface may be configured for limiting rotation of the ball stud relative to the vehicle part during fastening of the screw. In particular, the structured surface may be configured for preventing or substantially preventing rotation of the ball stud relative to the vehicle part during fastening of the screw. For this purpose, for example, the surface of the recess and/or the surface of the connection section contacting each other may be predominantly structured, i.e., at more than half of their surface area. Additionally, or alternatively, for example, the surface of the recess and/or the surface of the connection section may be structured with a significant size, e.g., height, of structured elements or shapes, such that the limitation or prevention of rotation of the ball stud may be achieved.

In an example, the structured surface may be a knurled surface. A knurled surface gives grip to the connection, thereby preventing rotation of the screw during assembly and making the connection stronger. The knurled surface may comprise several protrusions extending along one or multiple lines or distributed in another scheme or randomly on the knurled surface.

In an example, the structured surface may comprise multiple protrusions. The multiple protrusion may be in the number of tens, hundreds, thousands or more, for example. The protrusions may have any geometry or shape. The protrusions may be separate from one another or interconnected with one another, for example. The protrusions may generally extend in height from the surface towards the respectively opposite surface which it contacts in the ball joint arrangement.

In an example, the protrusions may have a height in the range of 0.1 to 0.5 mm, e.g., in the range of 0.2 to 0.4 mm. With this range, it has been found that an advantageous limitation of the rotation of the ball stud and advantageous attachment between the vehicle part and the at least part of the connection section of the stud portion may be achieved. At the same time, the protrusions are not too large, hence not requiring a larger torque on the screw for the connection or negatively impacting the connection, e.g., by making it difficult to completely insert and fasten the screw inside the threaded hole of the stud portion.

In an example, the protrusions may be notched into an opposing surface of the at least part of the connection section and/or the recess. Hence, the protrusions may have plastically deformed the at least part of the connection section and/or the recess at its respective surface, thereby creating the notches, into which the protrusions may be fitted. This allows for a very reliable limitation of the rotation of the ball stud and strong attachment between the vehicle part and the at least part of the connection section of the stud portion.

In an example, the connection section may comprise a tapered shaft segment, which may be positively inserted into the recess. The recess may also be tapered to provide for the positive insertion of the tapered shaft segment into the recess. The tapered shaft segment allows for an easy and intuitive manufacturing as well as a firm positive fit inside the recess.

In an example, the tapered shaft segment may have an inclined surface with an inclination angle in the range of 2 to 8 degrees relative to a center axis of the tapered shaft segment. In other words, the inclination angle of the tapered shaft segment may be a value in the range of 2 to 8 degrees, in particular in the range of 4 to 6 degrees, relative to a center and/or middle axis of the tapered shaft segment.

In an example, the tapered shaft segment may be press-fitted into the recess. In other words, the at least part of the connection section, in particular the tapered shaft segment, being positively inserted into the recess may be achieved by press-fit, for example. For this purpose, the outer dimensions of the connection section, in particular the tapered shaft segment, e.g., outer diameter, may be larger than the inner dimensions of the recess, e.g., inner diameter, e.g., larger by 0.05 mm, 0.1 mm or more, e.g., in the range of 0.1 to 0.5 mm. This provides for a particularly secure connection.

In an example, the tapered shaft segment may comprise the structured surface. However, the structured surface may not be limited to the tapered shaft segment but also or alternatively be provided on other parts or surfaces of the connection section, e.g., on a collar segment as described herein.

In an example, the connection section may further comprise a collar segment, the collar segment being configured as a limit stop for the vehicle part. The collar segment may be directly adjacent to the tapered shaft segment. The collar segment may be extending traverse, in particular substantially perpendicular, relative to the tapered shaft segment. Substantially perpendicular accounts for the inclination of the tapered shaft segment, e.g., in the range of 2 to 8 degrees, such that the collar segment may be arranged at an angle of 82 to 98 degrees relative to the tapered shaft segment, for example. When positively inserting the connection section with its tapered shaft segment into the recess, the insertion process may be stopped be the collar segment acting as a limit stop against the vehicle part comprising the recess.

In an example, the collar segment may comprise the structured surface. However, the structured surface may not be limited to the collar segment but also or alternatively be provided on other parts or surfaces of the connection section, e.g., on the tapered shaft segment.

In an example, the screw may comprise a spherically shaped head. Further, the vehicle part may comprise a spherically shaped socket. The spherically shaped head may be positively inserted in the spherically shaped socket. In other words, the screw head may be at least partially having a spherical shape or geometry and the socket, e.g., in the form of a recess, on the vehicle part may have a corresponding spherical shape or geometry, in particular for a positive fit. Thereby, the surface area in the connection between the screw head and the socket is increased compared to e.g., a flat screw head and flat surface of the vehicle part, allowing for a particularly secure and reliable connection.

In an example, the ball joint arrangement may further comprise a control arm for a vehicle suspension of the vehicle. The control arm may be comprising the joint housing. The vehicle part may be a steering knuckle for the vehicle suspension. However, alternative arrangements of the joint housing to other suspension or steering components than a control arm and other vehicle parts than steering knuckles may be used for the ball joint arrangement.

According to a second aspect of this disclosure, there is provided a vehicle suspension comprising the ball joint arrangement of the first aspect of this disclosure.

Generally, any kind of vehicle suspension, such as but not limited to MacPherson suspension, double wishbone suspension, multi-link suspension, etc. may be used.

According to a third aspect of this disclosure, a vehicle may be provided, which may comprise the ball joint arrangement of the first aspect of this disclosure or the vehicle suspension of the second aspect of this disclosure.

Generally, the vehicle may be any type of vehicle such as but not limited to a road vehicle, in particular a car or a truck.

It is noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a portion of a front vehicle suspension;
- Figure 2a: shows a ball joint arrangement to be used in the front vehicle suspension;
- Figure 2b: shows a detail of the structured surface in Fig. 2a;
- Figure 3: shows another ball joint arrangement to be used in the front vehicle suspension;
- Figure 4: shows an alternative ball joint arrangement as exemplary used for an upper control arm of the front vehicle suspension; and
- Figure 5: shows an alternative ball joint arrangement as exemplary used for a lower control arm of the front vehicle suspension.

### DETAILED DESCRIPTION

The Figures are merely schematic representations and serve only to illustrate examples of the disclosure. Identical or equivalent elements are in principle provided with the same reference signs.

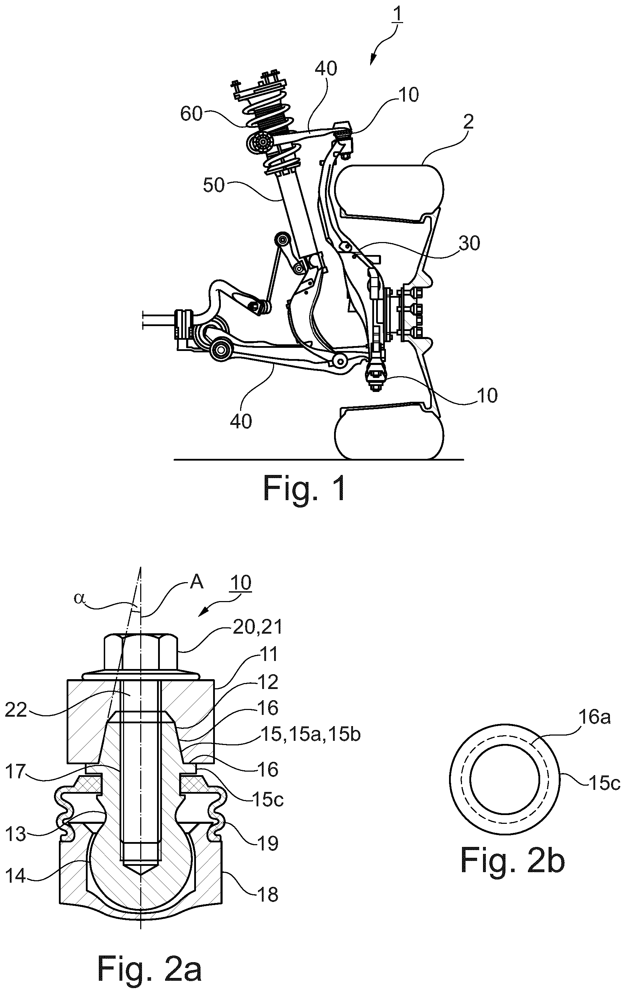

Figure 1 shows a portion of a vehicle suspension 1, specifically in this example of a front vehicle suspension. The vehicle suspension 1 has a tire 2 attached thereto via a steering knuckle 30. The steering knuckle 30 in turn is attached to and/or at least partially part of an upper and lower ball joint arrangement 10, which are in turn attached to control arms 40. The upper control arm 40 is exemplary shown to be further attached to a shock absorber 50 with a coil spring 60 of the vehicle suspension 1. Generally, only some of the components and an exemplary arrangement of a vehicle suspension 1 is shown in Fig. 1 for illustrative purposes. The vehicle suspension 1 may be configured different from the one shown in Fig. 1, such as but not limited to a MacPherson suspension, double wishbone suspension, multi-link suspension, etc.

Figure 2a shows an exemplary ball joint arrangement 10 as may be used in the vehicle suspension 1 of Fig. 1. The ball joint arrangement 10 of this example comprises a ball stud 13, wherein the ball stud 13 comprises a joint ball 14 and a stud portion 15 with a threaded hole 17. Moreover, the ball joint arrangement 10 comprises a joint housing 18, the joint ball 14 being mounted inside the joint housing 18. Specifically, the joint ball 14 may be movably mounted inside the joint housing 18 such that it may rotate within it. Further, the ball joint arrangement 10 comprises a vehicle part 11, which may for example be the steering knuckle 30 or part of the steering knuckle 30 of the vehicle suspension 1. The vehicle part 11 comprises a recess 12 into which at least a part of a connection section 15a of the stud portion 15 is positively inserted.

Further, the ball joint arrangement 10 comprises a screw 20. The screw 20 has a screw head 21 and a screw shaft 22. The screw 20 is fastened inside the threaded hole 17 of the stud portion 17 such that it attaches the vehicle part 11 to the ball stud 13.

When assembling the ball joint arrangement 10, specifically when fastening the screw 20, a rotation of the ball stud 13 relative to the vehicle part 13 is limited and a strength of the connection between the vehicle part 11 and the ball stud 13 is increased by means of a structured surface 16 located on the recess 12 and/or the at least part of the connection section 15a. Specifically, the structured surface 16 may be arranged on the recess 12, which means the surface of the vehicle part 11 forming the recess 12, and/or the connection section 15a, which may include a surface of an inclined surface of a tapered shaft segment 15b and/or a surface of a collar segment 15c of the stud portion 15 as shown in Fig. 2a.

The tapered shaft segment 15b of the stud portion 15 may be fully or at least partially inserted, in particular press-fitted, into the recess 12. In this example, the tapered shaft segment 15b has an inclined surface with an inclination angle α in the range of 2 to 8 degrees relative to a center axis A of the tapered shaft segment 15b as shown in Fig. 2a. The collar segment 15c may act as a limit stop for the vehicle part 11 and directly attach to or press against a lower surface of the vehicle part 11.

The ball joint arrangement 10 further comprises an optional sealing sleeve 19 arranged between the vehicle part 11, in particular the collar segment 15c, and the joint housing 18.

Figure 2b shows an exemplary configuration of the structured surface 16 as a knurled surface disposed on the collar segment 15c. In this example, several protrusions 16a are arranged in a line along the collar segment 15c. However, as mentioned, the protrusions 16a of the structured surface 16 may be disposed further or alternatively on the tapered shaft segment 15b of the connection segment 15a, the surface of the recess 12 and/or the surface of the vehicle part 11 opposite of the collar segment 15c. Moreover, the protrusions 16a may be arranged in any other scheme than one or more lines or at random, which also includes their orientations. Moreover, the protrusions 16a may be of different sizes or same sizes, which includes their height, length and width.

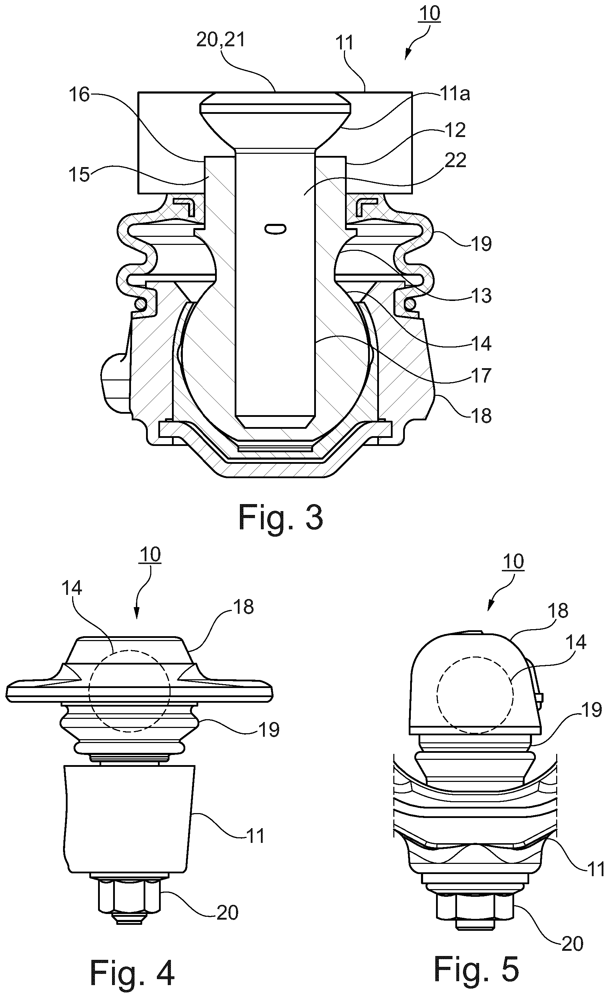

Figure 3 shows an alternative ball joint arrangement 10 without a tapered shaft segment 15b and with the sealing sleeve 19 being disposed between the vehicle part 11 and the joint housing 18. Further, the screw 20 of this example has a spherically shaped head 21, which is positively inserted into a spherically shaped socket 11a. Thereby, the surface area in the connection between the screw head 21 and the socket 11a is increased compared to e.g., a flat screw head 21 and flat surface of the vehicle part 11, allowing for a particularly secure and reliable connection.

Figure 4 shows the exemplary ball joint arrangement 10 as shown to be used for the upper control arm 40 in Fig. 1. Figure 5 shows the exemplary ball joint arrangement 10 as shown to be used for the lower control arm 40 in Fig. 1. In Figs. 4 and 5, the ball joint 14 is indicated by dashed lines inside the joint housing 18. Further, the vehicle part 11 is shown as part of the steering knuckle 30 for connecting the respective control arm 40 thereto.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of', in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

In the context of the present disclosure any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope of the claims.

### LIST OF REFERENCE SIGNS

- 1: vehicle suspension
- 2: tire
- 10: ball joint arrangement
- 11: vehicle part
- 11a: socket
- 12: recess
- 13: ball stud
- 14: joint ball
- 15: stud portion
- 15a: connection section
- 15b: tapered shaft segment
- 15c: collar segment
- 16: structured surface
- 17: threaded hole
- 18: joint housing
- 19: sealing sleeve
- 20: screw
- 21: screw head
- 22: screw shaft
- 30: steering knuckle
- 40: control arm
- 50: shock absorber
- 60: coil spring
- A: center axis of tapered shaft segment
- α: inclination angle

## Claims

1. A ball joint arrangement (10) for a vehicle, the ball joint arrangement (10) comprising:
- a ball stud (13), the ball stud (13) comprising a joint ball (14) and a stud portion (15), the stud portion (15) comprising a threaded hole (17);
- a joint housing (18), the joint ball (14) being mounted inside the joint housing (18);
- a vehicle part (11), the vehicle part (11) comprising a recess (12) into which at least a part of a connection section (15a) of the stud portion (15) is positively inserted; and
- a screw (20), the screw (20) being fasted inside the threaded hole (17) such that it attaches the vehicle part (11) to the ball stud (13);
wherein the recess (12) and/or the at least part of the connection section (15a) comprises a structured surface (16).

2. The ball joint arrangement (10) of claim 1, wherein the structured surface (16) is configured for limiting rotation of the ball stud (13) relative to the vehicle part (11) during fastening of the screw (20).

3. The ball joint arrangement (10) of claim 1 or 2, wherein the structured surface (16) is a knurled surface.

4. The ball joint arrangement (10) of any one of the previous claims, wherein the structured surface (16) comprises multiple protrusions (16a).

5. The ball joint arrangement (10) of claim 4, wherein the protrusions (16a) have a height in the range of 0.1 to 0.5 mm.

6. The ball joint arrangement (10) of claim 4 or 5, wherein the protrusions (16a) are notched into an opposing surface of the at least part of the connection section (15a) and/or the recess (12).

7. The ball joint arrangement (10) of any one of the previous claims, wherein the connection section (15a) comprises a tapered shaft segment (15b), which is positively inserted into the recess (12).

8. The ball joint arrangement (10) of claim 7, wherein the tapered shaft segment (15b) has an inclined surface with an inclination angle (α) in the range of 2 to 8 degrees relative to a center axis (A) of the tapered shaft segment (15b).

9. The ball joint arrangement (10) of claim 7 or 8, wherein the tapered shaft segment (15b) is press-fitted into the recess (12).

10. The ball joint arrangement (10) of any one of claims 7 to 9, wherein the tapered shaft segment (15b) comprises the structured surface (16).

11. The ball joint arrangement (10) of any one of claims 7 to 10, wherein the connection section (15a) further comprises a collar segment (15c), the collar segment (15c) being configured as a limit stop for the vehicle part (11).

12. The ball joint arrangement (10) of claim 11, wherein the collar segment (15c) comprises the structured surface (16).

13. The ball joint arrangement (10) of any one of the previous claims, wherein the screw (20) comprises a spherically shaped head (21) and the vehicle part (11) comprises a spherically shaped socket (11a), the spherically shaped head (21) being positively inserted in the spherically shaped socket (11a).

14. The ball joint arrangement (10) of any one of the previous claims, wherein the ball joint arrangement (10) further comprises a control arm (40) for a vehicle suspension (1) of the vehicle, the control arm (40) comprising the joint housing (18), and wherein the vehicle part (11) is a steering knuckle (30) for the vehicle suspension (1).

15. A vehicle suspension (1) comprising the ball joint arrangement (10) according to any one of the previous claims.
